# EUROPÄISCHE PATENTSCHRIFT

(11) **EP 3 212 958 B1**
(45) Veröffentlichungstag und Bekanntmachung des Hinweises auf die Patenterteilung: **04.09.2019**
(21) Anmeldenummer: 15767115.7
(22) Anmeldetag: 11.09.2015
(51) Int. Cl.: F16F 9/46

(54) **VERFAHREN ZUM BETREIBEN EINES REGELBAREN SCHWINGUNGSDÄMPFERS FÜR KRAFTFAHRZEUGE**
METHOD FOR OPERATING A CONTROLLABLE SHOCK ABSORBER FOR MOTOR VEHICLES
PROCÉDÉ POUR FAIRE FONCTIONNER UN AMORTISSEUR DE VIBRATIONS RÉGLABLE DESTINÉ À DES VÉHICULES AUTOMOBILES

(30) Priorität: 27.10.2014 DE 102014115577
(43) Veröffentlichungstag der Anmeldung: 06.09.2017
(73) Patentinhaber: ThyssenKrupp Bilstein GmbH, 58256 Ennepetal (DE); thyssenkrupp AG, 45143 Essen (DE)
(72) Erfinder: HAMERS, Wolfgang, 52428 Jülich (DE); LENZ, Tobias, 51588 Nümbrecht (DE)
(74) Vertreter: thyssenkrupp Intellectual Property GmbH
(86) Internationale Anmeldenummer: PCT/EP2015/070795
(87) Internationale Veröffentlichungsnummer: WO 2016/066314

(56) Entgegenhaltungen:
- EP-A1- 2 444 688
- WO-A1-2010/122102
- DE-C2- 10 126 555
- US-A1- 2008 257 668

## Beschreibung

Die vorliegende Erfindung betrifft ein Verfahren zum Betreiben eines regelbaren Schwingungsdämpfers gemäß dem Oberbegriff des Anspruches 1 sowie einen entsprechenden Schwingungsdämpfer nach dem Oberbegriff des Anspruchs 2.

### STAND DER TECHNIK

Ein entsprechender Schwingungsdämpfer ist aus der DE 44 41 047 C1 bekannt. An einem axial innerhalb eines Zylinderrohres geführten Kolben sind druckabhängige Dämpfungsventile für einen Austausch von Fluid in der Zug- und Druckstufe zwischen zwei Arbeitsräumen vorgesehen. Eine Vorsteuerung wirkt derart, dass ein steuerbarer Druck in Vorsteuerkammern aufgebaut wird. Der Vorsteuerdruck beaufschlagt die Ventilscheiben der Dämpfungsventile in deren geschlossene Stellung. Durch ein Bypasskanalsystem wird Fluid aus den Arbeitsräumen in die Vorsteuerkammern geleitet und so der Druck dort erhöht. Der Vorsteuerdruck wird mithilfe eines in dem Bypasskanalsystem angeordneten, extern einstellbaren Vorsteuerventils geregelt. Ein elastisches Element bildet die Abtrennung zwischen der Vorsteuerkammer und dem Arbeitsraum.

Ein weiterer Schwingungsdämpfer, der nach demselben Prinzip arbeitet, ist aus der DE 101 04 640 C1 bekannt. Hierin werden die Vorsteuerkammern durch Druckräume gebildet. Diese Druckräume werden durch jeweils ein Druckraumgehäuse und eine Dichtung, die beweglich auf einem Dämpfungsventil aufliegt, gebildet. Ein Vorsteuerventil steuert den Druck in den Vorsteuerkammern. Ein Auslass des Vorsteuerventils mündet in die Arbeitsräume.

In der US 7,694,785 B2 ist eine ähnliche Anwendung gezeigt. Der Druck in den Vorsteuerkammern wird ebenfalls über ein Vorsteuerventil geregelt. Ein Auslass des Vorsteuerventils mündet jeweils in die jeweils nicht aktive Vorsteuerkammer. Es ergibt sich allerdings eine Wechselwirkung zwischen der Funktion des Vorsteuerventils und dem Druck in der nicht aktiven Vorsteuerkammer, die unerwünschte Nebeneffekte hervorruft.

Die DE 101 26 555 C2 zeigt eine weitere Anordnung, bei der das Vorsteuerventil ebenfalls in die Arbeitsräume mündet. Ein Rückschlagventil verhindert einen direkten Zufluss von den Arbeitsräumen in Richtung Vorsteuerventil.

Die DE 100 20 778 B4 zeigt einen weiteren Schwingungsdämpfer, der grundsätzlich zwar nach dem grundsätzlichen Prinzip der DE 44 41 047 C1 arbeitet. Allerdings ist hierfür die die Regelung des Vorsteuerdrucks für jede Vorsteuerkammer ein separates Scheibenventil vorgesehen. Die beiden Vorsteuerkammern sind in getrennten Vorsteuerkreisen angeordnet und daher nicht über eine gemeinsame Fluidverbindung miteinander verbunden. Ferner werden die Dämpfungsventile über ein Gleitelement in die geschlossene Stellung beaufschlagt. Pro Gleitelement ist wiederum eine separate Federscheibe vorgesehen, die das Gleitelement in Richtung des Dämpfungsventils beaufschlagt.

Die Vorsteuerdrücke werden in recht kurzen Abständen verändert. Dies trifft vor allem bei solchen Schwingungsdämpfern zu, bei denen der Vorsteuerdruck in beiden Vorsteuerkammern durch lediglich ein einziges Vorsteuerventil eingestellt wird. Beim Befahren einer unebenen Fahrbahn (z.B. Kopfsteinpflaster) kann der Schwingungsdämpfer pro Sekunde etwa zwischen 10 und 20 mal zwischen der Zug und der Druckstufe wechseln; entsprechend schwingt das Vorsteuerventil ebenfalls mit einer Frequenz von etwa 10 bis 20 Hz, um zu jeder Stufe den gewünschten Vorsteuerdruck einzustellen. Dieses relativ hochfrequente Schwingen erzeugt Instabilitäten in Form von hochfrequenten Oberschwingungen im Verlauf der Dämpfungskraft. Bei Schwingungsdämpfern, die über hydraulisch getrennte Vorsteuerkreise verfügen, wie beispielsweise in der DE 100 20 778 B4 offenbart, wurde dieses Problem bislang nicht bemerkt.

### OFFENBARUNG DER ERFINDUNG

Es ist daher die Aufgabe der vorliegenden Erfindung, ein Verfahren zum Betreiben eines regelbaren Schwingungsdämpfers bereitzustellen, bei dem die angesprochenen Instabilitäten vermieden werden.

Die der Erfindung zugrunde liegende Aufgabe wird gelöst durch ein Verfahren zum Betreiben eines regelbaren Schwingungsdämpfers nach Anspruch 1 sowie einen regelbaren Schwingungsdämpfer nach Anspruch 2.

So wird erfindungsgemäß ein Verfahren zum Betreiben eines regelbaren Schwingungsdämpfers, insbesondere für ein Fahrzeugfahrwerk vorgeschlagen. Ein solcher Schwingungsdämpfer umfasst ein Zylinderrohr, das ein darin abgedichtetet aufgenommenes Hydraulikfluid aufweist, einen Kolben, der innerhalb des Zylinderrohres entlang einer Zylinderrohrachse axial bewegbar ist und der das Zylinderrohr in zwei Arbeitsräume unterteilt, eine Kolbenstange, die parallel zur Zylinderrohrachse ausgerichtet ist und an einem Ende mit dem Kolben verbunden ist. Im Kolben sind zumindest zwei Fluiddurchführungen vorgesehen, durch die der eine Arbeitsraum mit dem anderen Arbeitsraum verbunden ist, wobei eine erste Ventilbaugruppe zur Dämpfung der Kolbenbewegung in einer ersten Betätigungsrichtung an einer ersten Fluiddurchführung angeordnet ist und wobei eine zweite Ventilbaugruppe zur Dämpfung der Kolbenbewegung in einer zweiten Betätigungsrichtung an einer zweiten Fluiddurchführung angeordnet ist, wobei jede Ventilbaugruppe zumindest eine Ventilscheibe aufweist, die in einer geschlossenen Ventilstellung auf einem Ventilsitz aufsitzt, und die in einer geöffneten Ventilstellung zumindest teilweise von dem Ventilsitz beabstandet ist. Jede Ventilbaugruppe umfasst eine Vorsteuerkammer, wobei durch Druckbeaufschlagung der Vorsteuerkammer die jeweilige Ventilscheibe in die geschlossene Ventilstellung vorspannbar ist, wobei der Druck in den jeweiligen Vorsteuerkammern durch zumindest ein Vorsteuerventil einstellbar ist, wobei das Vorsteuerventil einen Ventilkörper umfasst, der definiert zwischen einer geschlossenen Stellung und einer geöffneten Stellung bewegbar ist, wodurch ein Ablaufquerschnitt zwischen den Vorsteuerkammern und den Arbeitsräumen gezielt einstellbar ist. Das erfindungsgemäße Verfahren ist dadurch gekennzeichnet, dass der Ventilkörper ablaufseitig definiert mit einem Staudruck beaufschlagt wird, wodurch die Bewegung des Ventilkörpers gedämpft wird.

Das Beaufschlagen des Ventilkörpers ablaufseitig mit einem Staudruck bewirkt eine hydraulische Einspannung des Ventilkörpers, wodurch die Bewegung des Ventilkörpers stabilisiert wird. Insgesamt ergibt sich so ein deutlich stabilerer Dämpfungskraftverlauf des Schwingungsdämpfers.

Die Erfindung betrifft ferner einen regelbarer Schwingungsdämpfer der eingangs genannten Art. Der Schwingungsdämpfer ist dadurch gekennzeichnet, dass dem Ventilkörper in Ablaufrichtung nachgelagert ein Ablaufventil angeordnet ist, durch welches ein ablaufseitig auf den Ventilkörper einwirkender Staudruck aufbaubar ist. Es ergeben sich die bezüglich des Verfahrens genannten Vorteile.

Die Erfindung ist insbesondere anwendbar bei einem solchen Schwingungsdämpfer, der exakt einen Ventilkörper zur Einstellung des Vorsteuerdrucks in beiden Vorsteuerkammern umfasst und dessen Stellung mithilfe eines Aktuators während des Betriebs gezielt eingestellt wird. Die Ventilkörper bei solchen Schwingungsdämpfern unterliegen sehr hohen Schwingungen, welche zu Oberschwingungen beim Dämpfkraftverlauf des Schwingungsdämpfers führen. Dabei ist insbesondere dasselbe Ablaufventil ablaufseitig sowohl an die erste Vorsteuerkammer als auch an die zweite Vorsteuerkammer angeschlossen.

Vorzugsweise schließt sich ablaufseitig dem Ventilköper ein erster und ein zweiter Ablaufpfad an, wobei der erste Ablaufpfad durch den Ventilkörper verschlossen wird, wenn ein Aktuator zur Ansteuerung der Stellung des Ventilskörpers inaktiv ist. Der erste Ablaufpfad wird in einem Fail-Safe-Zustand (z.B. Ausfall der Stromversorgung des Aktuators) dann von dem Ventilkörper verschlossen. Das Fluid ist dann gezwungen durch den anderen, zweiten Ablaufpfad zu strömen. In diesem zweiten Pfad kann dann durch eine gezielte Drosseleinrichtung eine Fail-Safe-Charakteristik eingestellt werden.

Dabei ist es bevorzugt, dass sich das Ablaufventil ablaufseitig an den ersten und an den zweiten Ablaufpfad anschließt. Somit kann das Ablaufventil selbst eine Einrichtung bilden, die die Fail-Safe-Charakterisitk zumindest beeinflusst. Die Anzahl benötigter Teile kann so reduziert werden.

Vorzugsweise ist zwischen dem Ventilkörper und dem Ablaufventil ein Rückschlagventil angeordnet ist, welches ein Rückströmen von Hydraulikfluid vom ersten Ablaufpfad in Richtung des Ventilkörpers durch den zweiten Ablaufpfad hindurch verhindert. Dabei ist vorzugsweise das Ablaufventil und das Rückschlagventil durch Scheiben gebildet, welche axial benachbart zueinander auf einem gemeinsamen Zapfen angeordnet sind. Dies ermöglicht eine sehr platzsparende Anordnung. Der Zapfen zentriert die kreisscheibenförmigen Ventilscheiben.

Das Ablaufventil ist insbesondere ein passives Druckbegrenzungsventil, umfassend ein oder mehrere vorgespannte Ventilscheiben.

Weiter kann die Anordnung sehr platzsparend ausgeführt werden, wenn der Ventilkörper in einer radial innenliegenden Ausnehmung dieses Zapfens angeordnet ist.

### BEVORZUGTE AUSFÜHRUNGSBEISPIELE DER ERFINDUNG

Weitere, die Erfindung weiterbildende Maßnahmen werden nachstehend gemeinsam mit der Beschreibung bevorzugter Ausführungsbeispiele der Erfindung anhand der Figuren näher dargestellt. Es zeigt:
- Fig. 1: einen herkömmlichen Schwingungsdämpfer mit einer Ventilbaugruppe im Querschnitt;
- Fig. 2: den Querschnitt durch ein Vorsteuerventil eines erfindungsgemäßen Schwingungsdämpfers in einem ersten Betriebszustand
- Fig. 3: den Querschnitt durch ein Vorsteuerventil eines erfindungsgemäßen Schwingungsdämpfers in einem zweiten Betriebszustand.
- Fig. 4: den Dämpfungskraftverlauf eines herkömmlichen Schwingungsdämpfers.

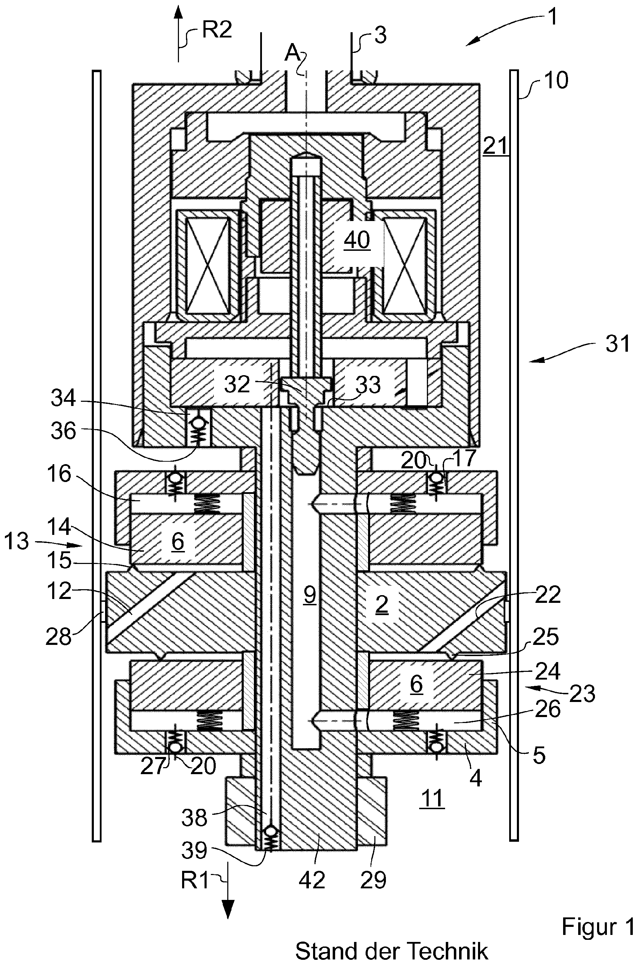

Figur 1 zeigt den Ausschnitt eines herkömmlichen Schwingungsdämpfers 1.

Der Schwingungsdämpfer 1 umfasst ein Zylinderrohr 10, in dem ein Kolben 2 entlang einer Zylinderrohrachse A verschiebbar gehalten ist. Der Kolben 2 weist an seinem Außenumfang eine Ringdichtung oder ein Kolbenband 28 auf, so dass der Kolben 2 das Zylinderrohr 10 in einen ersten (kolbenstangenfernen) Arbeitsraum 11 und in einen zweiten (kolbenstangenseitigen) Arbeitsraum 21 abdichtend unterteilt. Der Kolben 2 ist an einem Befestigungszapfen 42 befestigt, der wiederum fest mit einer Kolbenstange 3 verbunden ist. Bei Betätigung der Kolbenstange 3 in einer ersten Betätigungsrichtung R1 hin zum ersten Arbeitsraum 11 (auch "Druckrichtung" genannt) erhöht sich der Druck im ersten Arbeitsraum 11. Fluid, welches im ersten Arbeitsraum 11 vorhanden ist, strömt dann durch eine erste Fluiddurchführung 12 im Kolben 2 in den zweiten Arbeitsraum 21. Dabei fließt das Fluid durch die erste Fluiddurchführung 12 und durch eine erste Ventilbaugruppe 13 mit einem Druckbegrenzungsventil 14. Das Druckbegrenzungsventil 14 kann z.B. aus einer oder mehreren flexiblen Ventilscheiben 14 gebildet sein. Bei Erreichen eines Mindestdrucks des Fluids in dem ersten Arbeitsraum 11 wird das erste Druckbegrenzungsventil 14, welches mit Vorspannung auf einem ersten Ventilsitz 15 aufsitzt, von dem ersten Ventilsitz 15 zumindest teilweise gelöst. So wird die Ventilscheibe 14 von der geschlossenen Stellung in die vom Ventilsitz abgehobene, geöffnete Stellung überführt. Eine hydraulische Verbindung wird so zwischen dem ersten Arbeitsraum 11 und dem zweiten Arbeitsraum 21 hergestellt. Dabei erzeugt das erste Druckbegrenzungsventil 14 im Zusammenspiel mit dem ersten Ventilsitz 15 die Dämpfkraft.

Das Druckbegrenzungsventil 14 wird durch einen in einer ersten Vorsteuerkammer 16 herrschenden Druck (im Folgenden "Vorsteuerdruck") in Richtung des Ventilsitzes 15 beaufschlagt. Dieser Vorsteuerdruck in der ersten Vorsteuerkammer 16 kann während des Betriebs definiert eingestellt werden. Es ist ersichtlich, dass der Öffnungsdruck des Druckbegrenzungsventils 14 umso höher ist, je höher der Vorsteuerdruck in der ersten Vorsteuerkammer 16 ist. Der Vorsteuerdruck beeifnlusst somit den Kennlinienverlauf der Dämpfkraft im p-v-Diagramm.

Der Schwingungsdämpfer 1 umfasst ferner eine zweite Ventilbaugruppe 23, die analog ausgestaltet ist zur ersten Ventilbaugruppe 13. Die zweite Ventilbaugruppe ist dafür vorgesehen, die Strömung des Fluids abzubremsen, wenn der Kolben 2 in einer zweiten Betätigungsrichtung R2 (auch "Zugrichtung" genannt) bewegt wird. In diesem Fall strömt das Fluid von dem zweiten Arbeitsraum 21 über eine zweite Fluiddurchführung 22 in den ersten Arbeitsraum 11. Die zweite Ventilscheibe 24 wird durch einen in einer zweiten Vorsteuerkammer 26 herrschenden Vorsteuerdruck in Richtung des Ventilsitzes 25 beaufschlagt. Die zweite Ventilscheibe 24 und ein zweiter Ventilsitz 25 sind analog zu den entsprechenden Bauteilen der ersten Ventilbaugruppe 13 ausgebildet.

Die beiden Vorsteuerkammern 16, 26 sind miteinander hydraulisch über eine Verbindungsdurchführung 9 verbunden. Die Verbindungsdurchführung 9 umfasst eine axiale Bohrung in dem Befestigungszapfen 42 sowie zwei radiale Verbindungsbohrungen in dem Befestigungszapfen 42, welche die axiale Bohrung jeweils mit einer der Vorsteuerkammern 16, 26 verbinden. Im Wesentlichen herrscht in beiden Vorsteuerkammern 16, 26 stets derselbe Druck. Wenn nun der Kolben 2 in der ersten Betätigungsrichtung R1 bewegt wird, so erhöht sich der Druck im ersten Arbeitsraum 11 und das Dämpfungsfluid strömt durch eine Fluiddurchführung 27 zwischen dem ersten Arbeitsraum 11 und der zweiten Vorsteuerkammer 26 aus dem ersten Arbeitsraum 11 in die zweite Vorsteuerkammer 26, wodurch der Vorsteuerdruck in der zweiten Vorsteuerkammer 26 erhöht wird. Durch die Verbindungsdurchführung 9 hindurch pflanzt sich der in der zweiten Vorsteuerkammer 26 aufgebaute Vorsteuerdruck auch in die erste Vorsteuerkammer 16 fort. Dadurch wird der Vorsteuerdruck in der ersten Vorsteuerkammer 16 erzeugt, mit dem das Dämpfungsverhalten der ersten Ventilbaugruppe 13 beeinflusst wird. Gleiches gilt für die Betätigung in der zweiten Betätigungsrichtung R2. In diesem Fall strömt das Fluid von dem zweiten Arbeitsraum 21 durch eine Fluiddurchführung 17 zwischen dem zweiten Arbeitsraum 21 und der ersten Vorsteuerkammer 16 in die erste Vorsteuerkammer 16. Der Vorsteuerdruck, der so in der ersten Vorsteuerkammer 16 erzeugt wird, pflanzt sich wiederum durch die Verbindungsdurchführung 9 in die zweite Vorsteuerkammer 26 fort. Damit das Fluid durch die Fluiddurchführungen 17, 27 nicht von der ersten Vorsteuerkammer 16 direkt in den zweiten Arbeitsraum 21 bzw. von der zweiten Vorsteuerkammer 26 in den ersten Arbeitsraum 11 strömen kann, ist in den Fluiddurchführungen 17, 27 jeweils ein Einwegeventil 20 angebracht, die z.B. als Rückschlagventile ausgebildet sind.

Der Vorsteuerdruck in den beiden Vorsteuerkammern 16 und 26 kann geregelt werden. Hierzu ist ein Vorsteuerventil 31 vorgesehen, welches einen Ventilkörper 32 aufweist. Der Ventilkörper ist beweglich entlang der Zylinderrohrachse A gehalten und kann auf einem feststehenden (bezogen auf den Befestigungszapfen) Ventilsitz 33 aufsitzen. Wenn der Ventilkörper 32 auf dem Ventilsitz 33 aufsitzt, ist ein Abfließen von Fluid durch das Vorsteuerventil 31 weitgehend verhindert. Während einer solchen Phase kann der Vorsteuerdruck aufgebaut oder gehalten werden. Ist der Ventilkörper 32 von dem Ventilsitz 33 gelöst, so kann durch das Vorsteuerventil 31 Fluid aus der Verbindungsdurchführung 9 abfließen; in dieser Phase kann der Vorsteuerdruck reduziert werden. Der Ventilkörper 32 wird dabei mittels eines magnetischen Aktuators 40 in die erste Betätigungsrichtung R1 beaufschlagt. Zusätzlich kann eine Feder vorgesehen sein, die den Ventilkörper 32 beaufschlagt. In die zweite Betätigungsrichtung R2 wird der Ventilkörper 32 durch den Vorsteuerdruck beaufschlagt. Je nach den Kräfteverhältnissen, bedingt durch den magnetischen Aktuator 40 und den Vorsteuerdruck, ergibt sich dann die Stellung des Ventilkörpers 32 gegenüber dem Ventilsitz 33.

Das Fluid, welches durch das Vorsteuerventil 31 abfließt, fließt bei Betätigung der Kolbenstange in Richtung R1 (erhöhter Druck in erstem Arbeitsraum 11) durch einen zweiten Abflussdurchgang 34 zum zweiten Arbeitsraum 21. In dem zweiten Abflussdurchgang 34 ist ein Einwegeventil 36 angeordnet. Das Einwegeventil 36 verhindert in diesem Fall, dass Fluid aus dem zweiten Arbeitsraum 21 durch das Vorsteuerventil 31 in Richtung der Vorsteuerkammern 16, 26 gelangen kann.

Bei Betätigung der Kolbenstange 3 in Richtung R2 (erhöhter Druck in zweitem Arbeitsraum 21) fließt das durch das Vorsteuerventil 31 abfließende Fluid durch einen ersten Abflussdurchgang 38 zum ersten Arbeitsraum 11. Der erste Abflussdurchgang 38 ist durch eine axiale Bohrung im Befestigungszapfen 42 gebildet. Ein Einwegeventil 36 im Abflussdurchgang 38 verhindert, dass Fluid aus dem zweiten Arbeitsraum 21 durch das Vorsteuerventil 31 in Richtung der Vorsteuerkammern 16, 26 gelangt.

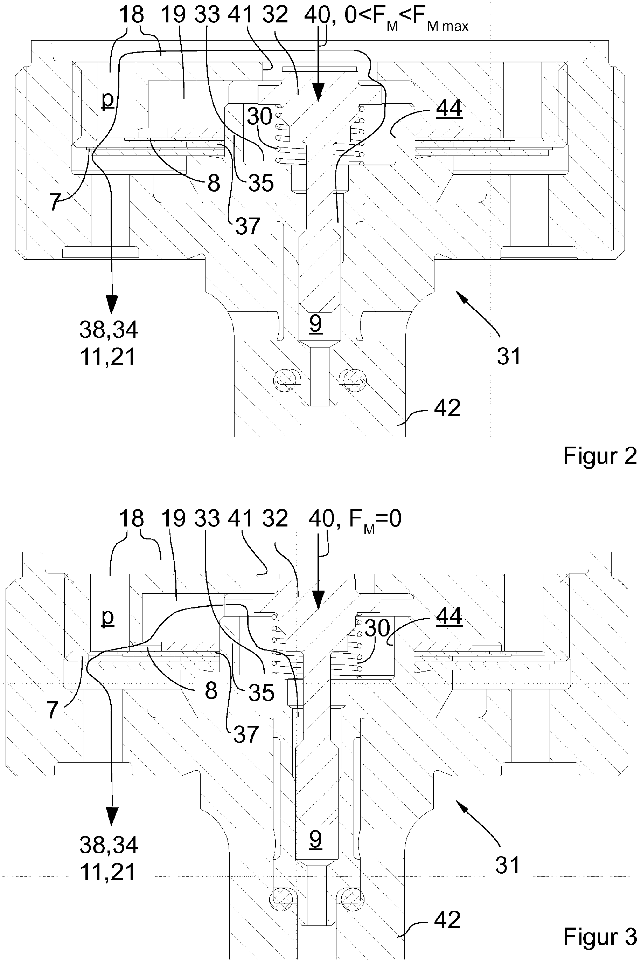

In einen solchen Schwingungsdämpfer ist erfindungsgemäß nun eine Anordnung eingebracht, wie sie nachfolgend anhand der Figuren 2 und 3 beschrieben wird.

Die Figuren 2 und 3 zeigen ein Vorsteuerventil 31 eines erfindungsgemäßen Schwingungsdämpfers, welcher weitgehend analog zur Ausgestaltung nach Figur 1 ausgebildet ist. Die Abweichungen ergeben sich aus der nachfolgenden Beschreibung.

Über die Verbindungsdurchführung 9 steht dieses Vorsteuerventil 31 in Kommunikation mit den beiden Vorsteuerkammern 16, 26, analog zur Ausgestaltung nach Figur 1. Die Verbindungsdurchführung 9 mündet in eine Kammer 44, in der der Ventilkörper 32 angeordnet ist. Dieser ist parallel zur Zylinderachse A beweglich und wird einerseits von einer Spiralfeder 30 und andererseits durch den magnetischen Aktuator 40 parallel zur Zylinderachse A beaufschlagt. In einem ersten Betriebszustand, dem regulären Betriebszustand, wird der Ventilkörper 32 durch die Magnetkraft, die grundsätzlich zwischen 0 und einer maximalen Magnetkraft F_{M max} variieren kann, zwischen einer geöffneten und einer geschlossenen Stellung gehalten. Ist der Ventilkörper 32 beabstandet vom Ventilsitz 33 kann Fluid durch einen ersten Ablaufpfad 18 über die Abflussdurchgänge 38, 34 in die Arbeitsräume 11 und 21 abfließen, entsprechend der Ausgestaltung nach Figur 1. Liegt der Ventilkörper 32 auf dem Ventilsitz 33 auf, so befindet sich der Ventilkörper 32 in der geschlossenen Stellung, andernfalls befindet sich der Ventilkörper 32 in einer von mehreren möglichen geöffneten Stellungen. In der geschlossenen Stellung kann der Ventilkörper 32 vollständig abdichtend auf dem Ventilsitz 33 aufliegen, er muss aber nicht vollständig abdichtend auf dem Ventilsitz 33 aufliegen.

Ein Ablaufventil 7 in Form eines Scheibenventils ist in diesem ersten Ablaufpfad 18 vorgesehen. Das Ablaufventil 7 drosselt den Abfluss über den ersten Ablaufpfad 18 und erzeugt so einen Staudruck p, der wiederum ablaufseitig auf den Ventilkörper 32 wirkt. Dadurch wird der Ventilkörper 32 in seiner Bewegung hydraulisch zwischen dem Druck in der Verbindungsdurchführung 9 und dem Staudruck p im ersten Ablaufpfad 18 eingespannt und in seiner Bewegung gedämpft. Ein solches Ablaufventil 7 kann grundsätzlich eine progressive, lineare und/oder degressive Charakteristik besitzen und kann auf den spezifischen Einsatzzweck des Schwingungsdämpfers abgestimmt sein. Durch die Dämpfung der Bewegung des Ventilkörpers 32 wird die Stabilität des Gesamtsystems verbessert.

Das Vorsteuerventil 31 verfügt ferner über eine Fail-Safe-Funktion als zweiten Betriebszustand, was anhand der Figur 3 erläutert wird. Im Falle eines Defekts des Magnetaktuators 40 entfällt die Magnetkraft F_{M}. In diesem Fall beaufschlagt die Feder 30 den Ventilkörper vom Ventilsitz 33 weg. Dann versperrt der Ventilkörper 32 eine Eingangsöffnung 41 des ersten Ablaufpfades 18. Das Ablaufen des Hydraulikfluids erfolgt dann ausschließlich über einen zweiten Ablaufpfad 19, an dessen Ende ein Scheibenventil 8 angeordnet ist. Das Scheibenventil 8 hat sowohl die Funktion einer Drossel als auch die Funktion eines Einwegeventils. Durch Dimensionierung des Scheibenventils 8 kann das Fail-Safe-Verhalten, also das Dämpfungsverhalten, welches der Schwingungsdämpfer im Falle eines Stromausfalls am Aktuator ausbilden soll, im Vorfeld definiert eingestellt werden. Das Scheibenventil 8 erzeugt dabei einen Staudruck, wodurch ein gewisser Vorsteuerdruck in den Vorsteuerkammern in Abhängigkeit der Strömungsgeschwindigkeit des Fluids aufrecht erhalten wird, selbst wenn das Vorsteuerventil ausfällt.

Durch die in den Figuren 2 und 3 gezeigte Anordnung ergibt sich ein recht kleiner Bauraum für das Ablaufventil und die Fail-Safe-Anordnung, die für den zweiten Ablaufpfad 19 und das Scheibenventil 8 zusätzlich benötigt wird. Dabei ist sowohl das Ablaufventil 7 als auch das Scheibenventil 8 durch Scheibenpakete gebildet, die axial benachbart zueinander angeordnet und durch einen gemeinsamen Zapfen 35 zentriert sind.

Dazwischen ist eine Distanzhülse 37 angeordnet, die Raum zum Auslenken der Ventilscheibe 8 infolge der Druckbeaufschlagung bereit stellt. Dadurch, dass sowohl das Ablaufventil 7 als auch das Scheibenventil 8 für den Fail-Safe-Betrieb für beide Stufen (Druckstufe bzw. Zugstufe), also zum Ablaufen des Hydraulikfluids aus beiden Vorsteuerkammern, vorgesehen ist, ergibt sich eine weitere Einsparung an Platzbedarf. Zudem ist der Ventilkörper 32 platzsparend in der Kammer 44 angeordnet, die eine radial innen liegende Ausnehmung des Zapfens 35 ausbildet. Der Ventilkörper 32 wird erfindungsgemäß nun durch den ablaufseitig anliegenden Staudruck abgebremst, wodurch dessen Schwingungen gedämpft werden.

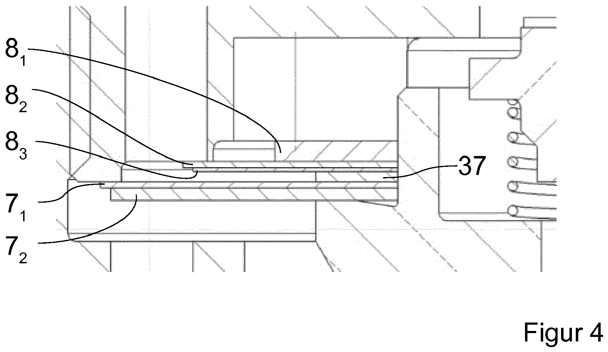

Figur 4 zeigt einen vergrößerten Ausschnitt der Figur 2 im Bereich der Scheiben des Ablaufventils 7 und des Scheibenventils 8. Das Scheibenventil 8 ist dabei gebildet aus einer Vorspannscheibe 8₁, einer sich daran in Ablaufrichtung anschließenden Drosselscheibe 8₂ und einer diese in Schließrichtung beaufschlagende Deckscheibe 8₃. Daran schließt sich die Hülse 37 als Ausgleichsscheibe an. Das Ablaufventil 7 umfasst eine Ablaufdrosselscheibe 7₁ sowie eine Deckscheibe 7₂, welche die Ablaufdrosselscheibe 7₁ in Schließstellung beaufschlagt.

Die Drosselscheibe 8₂ stellt bis zu einem gewissen Druck einen gleichbleibenden Öffnungsquerschnitt bereit; ab einem Öffnungsdruck, der durch die Auswahl der Deckscheibe 8₃ einstellbar ist, hebt sich die Drosselscheibe 8₂ von einem Ventilsitz ab und es vergrößert sich der Öffnungsquerschnitt. Entsprechendes gilt auch für das Ablaufventil 7. Die Ablaufdrosselscheibe 7₁ stellt bis zu einem gewissen Druck einen gleichbleibenden Öffnungsquerschnitt bereit; ab einem Öffnungsdruck, der durch die Auswahl der Deckscheibe 7₂ einstellbar ist, hebt sich die Ablaufdrosselscheibe 7₁ von einem Ventilsitz ab und es vergrößert sich der Öffnungsquerschnitt.

Als ablaufseitiger Bereich wird grundsätzlich diejenige Seite eines Bauteils im hydraulischen Pfad zwischen der Vorsteuerkammer 16, 26 und den Arbeitsräumen 11, 21 verstanden, die der Vorsteuerkammer 16, 26 abgewandt und dem Arbeitsraum 11, 21 zugewandt ist. Das Hydraulikfluid strömt entlang der Ablaufrichtung von der Vorsteuerkammer 16, 26 über die Fluiddurchführung 9 zum Ventilkörper 32, anschließend durch einen der Ablaufpfade 18, 19 zum Ablaufventil 7. Anschließend mündet es in einen der Arbeiträume 11, 21.

### Bezugszeichenliste

- 1: Schwingungsdämpfer
- 2: Kolben
- 3: Kolbenstange
- 6: formstabiler bewegbarer Deckel
- 7: Ablaufventil
- 7₁: Ablaufdrosselscheibe
- 7₂: Deckscheibe
- 8: Scheibenventil
- 8₁: Vorspannscheibe
- 8₂: Drosselscheibe
- 8₃: Deckscheibe

- 9: Verbindungsdurchführung zwischen den beiden Vorsteuerkammern
- 10: Zylinderrohr
- 11: erster Arbeitsraum
- 12: erste Fluiddurchführung
- 13: erste Ventilbaugruppe
- 14: erste Ventilscheibe
- 15: erster Ventilsitz
- 16: erste Vorsteuerkammer
- 17: Verbindungsdurchführung zwischen zweitem Arbeitsraum 21 und erster Vorsteuerkammer 16
- 18: erster Ablaufpfad
- 19: zweiter Ablaufpfad
- 20: Einwegeventil
- 21: zweiter Arbeitsraum
- 22: zweite Fluiddurchführung
- 23: zweite Ventilbaugruppe
- 24: zweite Ventilscheibe
- 25: zweiter Ventilsitz
- 26: zweite Vorsteuerkammer
- 27: Fluiddurchführung zwischen erstem Arbeitsraum 11 und zweiter Vorsteuerkammer 26
- 28: Ringdichtung
- 29: Mutter
- 30: Feder
- 31: Vorsteuerventil
- 32: Ventilkörper
- 33: Ventilsitz
- 34: zweiter Abflussdurchgang zum zweiten Arbeitsraum
- 35: Zapfen
- 36: Einwegeventil
- 37: Distanzhülse
- 38: erster Abflussdurchgang zum ersten Arbeitsraum
- 39: Einwegeventil
- 40: magnetischer Aktuator
- 41: Eingangsöffnung des ersten Ablaufpfades
- 42: Befestigungszapfen
- 43: Ventilsitz
- 44: Kammer

- A: Zylinderrohrachse
- R: Betätigungsrichtung
- p: Staudruck

## Patentansprüche

1. Verfahren zum Betreiben eines regelbaren Schwingungsdämpfers (1), insbesondere für ein Fahrzeugfahrwerk, der Schwingungsdämpfer umfasst ein Zylinderrohr (10), das ein darin abgedichtet aufgenommenes Hydraulikfluid aufweist, einen Kolben (2), der innerhalb des Zylinderrohres (10) entlang einer Zylinderrohrachse (A) axial bewegbar ist und der das Zylinderrohr (10) in zwei Arbeitsräume (11, 21) unterteilt, eine Kolbenstange (3), die parallel zur Zylinderrohrachse (A) ausgerichtet und mit dem Kolben (2) verbunden ist, wobei der Kolben (2) zumindest zwei Fluiddurchführungen (12, 22) aufweist, durch die der eine Arbeitsraum (11, 21) mit dem anderen Arbeitsraum (21, 11) verbunden ist, wobei eine erste Ventilbaugruppe (13) zur Dämpfung der Kolbenbewegung in einer ersten Betätigungsrichtung (R1) an einer ersten Fluiddurchführung (12) angeordnet ist und wobei eine zweite Ventilbaugruppe (23) zur Dämpfung der Kolbenbewegung in einer zweiten Betätigungsrichtung (R2) an einer zweiten Fluiddurchführung (22) angeordnet ist, wobei jede Ventilbaugruppe (13, 23) zumindest eine Ventilscheibe (14, 24) aufweist, die in einer geschlossenen Ventilstellung auf einem Ventilsitz (15, 25) aufsitzt, und die in einer geöffneten Ventilstellung zumindest teilweise von dem Ventilsitz (15, 25) beabstandet ist, wobei jede Ventilbaugruppe (13, 23) eine Vorsteuerkammer (16, 26) umfasst, wobei durch Druckbeaufschlagung der Vorsteuerkammer (16, 26) die jeweilige Ventilscheibe (14, 24) in die geschlossene Ventilstellung vorspannbar ist, wobei der Druck in den jeweiligen Vorsteuerkammern (16, 26) durch zumindest ein Vorsteuerventil (31) einstellbar ist, wobei das Vorsteuerventil (31) einen Ventilkörper (32) umfasst, der definiert zwischen einer geschlossenen Stellung und einer geöffneten Stellung bewegbar ist, wodurch ein Ablaufquerschnitt zwischen den Vorsteuerkammern (16, 26) und den Arbeitsräumen (21, 11) gezielt einstellbar ist,
**dadurch gekennzeichnet,**
**dass** der Ventilkörper (32) des Vorsteuerventils (31) ablaufseitig definiert mit einem Staudruck (p) beaufschlagt wird, wodurch die Bewegung des Ventilkörpers (32) gedämpft wird.

2. Regelbarer Schwingungsdämpfer (1), insbesondere für ein Fahrzeugfahrwerk, umfassend ein Zylinderrohr (10), das ein darin abgedichtetet aufgenommenes Hydraulikfluid aufweist, einen Kolben (2), der innerhalb des Zylinderrohres (10) entlang einer Zylinderrohrachse (A) axial bewegbar ist und der das Zylinderrohr (10) in zwei Arbeitsräume (11, 21) unterteilt, eine Kolbenstange (3), die parallel zur Zylinderrohrachse (A) ausgerichtet und mit dem Kolben (2) verbunden ist, wobei der Kolben (2) zumindest zwei Fluiddurchführungen (12, 22) aufweist, durch die der eine Arbeitsraum (11, 21) mit dem anderen Arbeitsraum (21, 11) verbunden ist, wobei eine erste Ventilbaugruppe (13) zur Dämpfung der Kolbenbewegung in einer ersten Betätigungsrichtung (R1) an einer ersten Fluiddurchführung (12) angeordnet ist und wobei eine zweite Ventilbaugruppe (23) zur Dämpfung der Kolbenbewegung in einer zweiten Betätigungsrichtung (R2) an einer zweiten Fluiddurchführung (22) angeordnet ist, wobei jede Ventilbaugruppe (13, 23) zumindest eine Ventilscheibe (14, 24) aufweist, die in einer geschlossenen Ventilstellung auf einem Ventilsitz (15, 25) aufsitzt, und die in einer geöffneten Ventilstellung zumindest teilweise von dem Ventilsitz (15, 25) beabstandet ist, wobei jede Ventilbaugruppe (13, 23) eine Vorsteuerkammer (16, 26) umfasst, wobei durch Druckbeaufschlagung der Vorsteuerkammer (16, 26) die Ventilscheibe (14, 24) in die geschlossene Ventilstellung vorspannbar ist, wobei der Druck in den jeweiligen Vorsteuerkammern (16, 26) durch zumindest ein Vorsteuerventil (31) einstellbar ist, wobei das Vorsteuerventil (31) einen Ventilkörper (32) umfasst, der definiert zwischen einer geschlossenen Stellung und einer geöffneten Stellung bewegbar ist, wodurch ein Ablaufquerschnitt zwischen den Vorsteuerkammern (16, 26) und den Arbeitsräumen (21, 11) gezielt einstellbar ist,
**dadurch gekennzeichnet,**
**dass** dem Ventilkörper (32) des Vorsteuerventils (31) ablaufseitig ein Ablaufventil (7) zugeordnet ist, durch welches ablaufseitig ein auf den Ventilkörper (32) einwirkender Staudruck (p) aufbaubar ist.

3. Schwingungsdämpfer (1) nach dem vorherigen Anspruch,
**dadurch gekennzeichnet,**
**dass** dasselbe Ablaufventil (7) ablaufseitig sowohl an die erste Vorsteuerkammer (16) als auch an die zweite Vorsteuerkammer (26) angeschlossen ist.

4. Schwingungsdämpfer (1) nach einem Ansprüche 2 oder 3,
**dadurch gekennzeichnet,**
**dass** sich dem Ventilköper (32) ablaufseitig ein erster und ein zweiter Ablaufpfad (18, 19) anschließen, wobei der erste Ablaufpfad (18) durch den Ventilkörper (32) verschlossen wird, wenn ein Aktuator (40) zur Ansteuerung der Stellung des Ventilskörpers (32) inaktiv ist.

5. Schwingungsdämpfer (1) nach dem vorherigen Anspruch,
**dadurch gekennzeichnet,**
**dass** das Ablaufventil (7) ablaufseitig an den ersten Ablaufpfad (18) und an den zweiten Ablaufpfad (19) angeschlossen ist.

6. Schwingungsdämpfer (1) nach Anspruch 4 oder 5,
**dadurch gekennzeichnet,**
**dass** zwischen dem Ventilkörper (32) und dem Ablaufventil (7) ein Rückschlagventil (8) angeordnet ist, welches ein Rückströmen von Hydraulikfluid vom ersten Ablaufpfad (18) in Richtung des Ventilkörpers (32) durch den zweiten Ablaufpfad (19) hindurch verhindert.

7. Schwingungsdämpfer (1) nach dem vorherigen Anspruch,
**dadurch gekennzeichnet,**
**dass** das Ablaufventil (7) und das Rückschlagventil (8) durch Scheiben gebildet sind, welche axial benachbart zueinander auf einem gemeinsamen Zapfen (35) angeordnet sind.

8. Schwingungsdämpfer (1) nach dem vorherigen Anspruch, **dadurch gekennzeichnet,**
**dass** der Ventilkörper (32) in einer radial innenliegenden Ausnehmung (44) des Zapfens (35) angeordnet ist.

9. Verwendung eines Schwingungsdämpfers (1) nach einem der Ansprüche 2 bis 8 zur Durchführung des Verfahrens nach Anspruch 1.

## Claims

1. Method for operating a controllable shock absorber (1), in particular for a vehicle chassis, the shock absorber comprising a cylinder tube (10) which has a hydraulic fluid which is received therein in a sealed manner, a piston (2) which can be moved axially along a cylinder tube axis (A) within the cylinder tube (10) and divides the cylinder tube (10) into two working spaces (11, 21), a piston rod (3) which is oriented parallel to the cylinder tube axis (A) and is connected to the piston (2), the piston (2) having at least two fluid leadthroughs (12, 22), by way of which the one working space (11, 21) is connected to the other working space (21, 11), a first valve assembly (13) for damping the piston movement in a first actuating direction (R1) being arranged on a first fluid leadthrough (12), and a second valve assembly (23) for damping the piston movement in a second actuating direction (R2) being arranged on a second fluid leadthrough (22), each valve assembly (13, 23) having at least one valve disc (14, 24) which is seated on a valve seat (15, 25) in a closed valve position, and which is spaced apart at least partially from the valve seat (15, 25) in an open valve position, each valve assembly (13, 23) comprising a pilot control chamber (16, 26), it being possible for the respective valve disc (14, 24) to be prestressed into the closed valve position by way of pressure loading of the pilot control chamber (16, 26), it being possible for the pressure in the respective pilot control chambers (16, 26) to be set by way of at least one pilot control valve (31), the pilot control valve (31) comprising a valve body (32) which can be moved in a defined manner between a closed position and an open position, as a result of which an outflow cross section between the pilot control chambers (16, 26) and the working spaces (21, 11) can be set in a targeted manner,
**characterized**
**in that** the valve body (32) of the pilot control valve (31) is loaded on the outflow side with a back pressure (p) in a defined manner, as a result of which the movement of the valve body (32) is damped.

2. Controllable shock absorber (1), in particular for a vehicle chassis, comprising a cylinder tube (10) which has a hydraulic fluid which is received therein in a sealed manner, a piston (2) which can be moved axially along a cylinder tube axis (A) within the cylindrical tube (10) and which divides the cylinder tube (10) into two working spaces (11, 21), a piston rod (3) which is oriented parallel to the cylinder tube axis (A) and is connected to the piston (2), the piston (2) having at least two fluid leadthroughs (12, 22), by way of which the one working space (11, 21) is connected to the other working space (21, 11), a first valve assembly (13) for damping the piston movement in a first actuating direction (R1) being arranged on a first fluid leadthrough (12), and a second valve assembly (23) for damping the piston movement in a second actuating direction (R2) being arranged on a second fluid leadthrough (22), each valve assembly (13, 23) having at least one valve disc (14, 24) which is seated on a valve seat (15, 25) in a closed valve position, and which is spaced apart at least partially from the valve seat (15, 25) in an open valve position, each valve assembly (13, 23) comprising a pilot control chamber (16, 26), it being possible for the respective valve disc (14, 24) to be prestressed into the closed valve position by way of pressure loading of the pilot control chamber (16, 26), it being possible for the pressure in the respective pilot control chambers (16, 26) to be set by way of at least one pilot control valve (31), the pilot control valve (31) comprising a valve body (32) which can be moved in a defined manner between a closed position and an open position, as a result of which an outflow cross section between the pilot control chambers (16, 26) and the working spaces (21, 11) can be set in a targeted manner,
**characterized**
**in that** the valve body (32) of the pilot control valve (31) is assigned an outflow valve (7) on the outflow side, by way of which outflow valve (7) a back pressure (p) which acts on the valve body (32) can be built up on the outflow side.

3. Shock absorber (1) according to the preceding claim,
**characterized**
**in that** the same outflow valve (7) is connected on the outflow side both to the first pilot control chamber (16) and to the second pilot control chamber (26).

4. Shock absorber (1) according to either of Claims 2 and 3,
**characterized**
**in that** the valve body (32) is adjoined on the outflow side by a first and a second outflow path (18, 19), the first outflow path (18) being closed by way of the valve body (32) when an actuator (40) for actuating the position of the valve body (32) is inactive.

5. Shock absorber (1) according to the preceding claim,
**characterized**
**in that** the outflow valve (7) is connected on the outflow side to the first outflow path (18) and to the second outflow path (19).

6. Shock absorber (1) according to Claim 4 or 5,
**characterized**
**in that** a check valve (8) is arranged between the valve body (32) and the outflow valve (7), which check valve (8) prevents a return flow of hydraulic fluid from the first outflow path (18) in the direction of the valve body (32) through the second outflow path (19).

7. Shock absorber (1) according to the preceding claim,
**characterized**
**in that** the outflow valve (7) and the check valve (8) are formed by way of disks which are arranged on a common journal (35) so as to be axially adjacent to one another.

8. Shock absorber (1) according to the preceding claim,
**characterized**
**in that** the valve body (32) is arranged in a radially inner recess (44) of the journal (35).

9. Use of a shock absorber (1) according to one of Claims 2 to 8 for carrying out the method according to Claim 1.

## Revendications

1. Procédé pour faire fonctionner un amortisseur de vibrations réglable (1), destiné en particulier au train roulant d'un véhicule automobile, l'amortisseur de vibrations comprend un tube de cylindre (10), qui présente un fluide hydraulique contenu dans celui-ci de façon étanche, un piston (2), qui est déplaçable axialement à l'intérieur du tube de cylindre (10) le long d'un axe du tube de cylindre (A) et qui divise le tube de cylindre (10) en deux chambres de travail (11, 21), une tige de piston (3), qui est orientée parallèlement à l'axe du tube de cylindre (A) et qui est reliée au piston (2), dans lequel le piston (2) présente au moins deux passages de fluide (12, 22), par lesquels une première chambre de travail (11, 21) est reliée à l'autre chambre de travail (21, 11), dans lequel un premier ensemble de soupape (13) est disposé sur un premier passage de fluide (12) pour amortir le mouvement du piston dans une première direction d'actionnement (R1) et dans lequel un second ensemble de soupape (23) est disposé sur le second passage de fluide (22) pour amortir le mouvement du piston dans une seconde direction d'actionnement (R2), dans lequel chaque ensemble de soupape (13, 23) présente au moins un disque de soupape (14, 24), qui dans une position fermée de la soupape s'applique sur un siège de soupape (15, 25) et qui dans une position ouverte de la soupape est au moins en partie espacé du siège de soupape (15, 25), dans lequel chaque ensemble de soupape (13, 23) comprend une chambre de commande pilote (16, 26), dans lequel par une mise sous pression de la chambre de commande pilote (16, 26) le disque de soupape respectif (14, 24) peut être précontraint dans la position fermée de la soupape, dans lequel la pression dans les chambres de commande pilote respectives (16, 26) peut être réglée par au moins une soupape de commande pilote (31), dans lequel la soupape de commande pilote (31) comprend un corps de soupape (32), qui est déplaçable de façon définie entre une position fermée et une position ouverte, ce qui permet de régler de façon adéquate une section transversale d'écoulement entre les chambres de commande pilote (16, 26) et les chambres de travail (21, 11),
**caractérisé en ce que** l'on soumet le corps de soupape (32) de la soupape de commande pilote (31) de façon définie côté aval à une pression de retenue (p), et on amortit ainsi le mouvement du corps de soupape (32).

2. Amortisseur de vibrations réglable (1), en particulier pour un train roulant de véhicule automobile, comprenant un tube de cylindre (10), qui présente un fluide hydraulique contenu dans celui-ci de façon étanche, un piston (2), qui est déplaçable axialement à l'intérieur du tube de cylindre (10) le long d'un axe du tube de cylindre (A) et qui divise le tube de cylindre (10) en deux chambres de travail (11, 21), une tige de piston (3), qui est orientée parallèlement à l'axe du tube de cylindre (A) et qui est reliée au piston (2), dans lequel le piston (2) présente au moins deux passages de fluide (12, 22), par lesquels une première chambre de travail (11, 21) est reliée à l'autre chambre de travail (21, 11), dans lequel un premier ensemble de soupape (13) est disposé sur un premier passage de fluide (12) pour amortir le mouvement du piston dans une première direction d'actionnement (R1) et dans lequel un second ensemble de soupape (23) est disposé sur le second passage de fluide (22) pour amortir le mouvement du piston dans une seconde direction d'actionnement (R2), dans lequel chaque ensemble de soupape (13, 23) présente au moins un disque de soupape (14, 24), qui dans une position fermée de la soupape s'applique sur un siège de soupape (15, 25) et qui dans une position ouverte de la soupape est au moins en partie espacé du siège de soupape (15, 25), dans lequel chaque ensemble de soupape (13, 23) comprend une chambre de commande pilote (16, 26), dans lequel par une mise sous pression de la chambre de commande pilote (16, 26) le disque de soupape respectif (14, 24) peut être précontraint dans la position fermée de la soupape, dans lequel la pression dans les chambres de commande pilote respectives (16, 26) peut être réglée par au moins une soupape de commande pilote (31), dans lequel la soupape de commande pilote (31) comprend un corps de soupape (32), qui est déplaçable de façon définie entre une position fermée et une position ouverte, ce qui permet de régler de façon adéquate une section transversale d'écoulement entre les chambres de commande pilote (16, 26) et les chambres de travail (21, 11),
**caractérisé en ce qu'**une soupape d'écoulement (7) est associée côté aval au corps de soupape (32) de la soupape de commande pilote (31), par laquelle une pression de retenue (p) agissant côté aval sur le corps de soupape (32) peut être créée.

3. Amortisseur de vibrations (1) selon la revendication précédente,
**caractérisé en ce que** la même soupape d'écoulement (7) est raccordée côté aval aussi bien à la première chambre de commande pilote (16) qu'à la seconde chambre de commande pilote (26).

4. Amortisseur de vibrations (1) selon une des revendications 2 ou 3,
**caractérisé en ce qu'**un premier et un second chemins d'écoulement (18, 19) se raccordent côté aval au corps de soupape (32), dans lequel le premier chemin d'écoulement (18) est fermé par le corps de soupape (32) lorsqu'un actionneur (40) pour la commande de la position du corps de soupape (32) est inactif.

5. Amortisseur de vibrations (1) selon la revendication précédente,
**caractérisé en ce que** la soupape d'écoulement (7) est raccordée côté aval au premier chemin d'écoulement (18) et au second chemin d'écoulement (19).

6. Amortisseur de vibrations (1) selon une revendication 4 ou 5,
**caractérisé en ce qu'**un clapet anti-retour (8) est disposé entre le corps de soupape (32) et la soupape d'écoulement (7), et empêche un reflux de fluide hydraulique du premier chemin d'écoulement (18) en direction du corps de soupape (32) à travers le second chemin d'écoulement (19).

7. Amortisseur de vibrations (1) selon la revendication précédente,
**caractérisé en ce que** la soupape d'écoulement (7) et le clapet anti-retour (8) sont formés par des disques, qui sont disposés axialement à proximité l'un de l'autre sur un tourillon commun (35).

8. Amortisseur de vibrations (1) selon la revendication précédente,
**caractérisé en ce que** le corps de soupape (32) est disposé dans un évidement radialement intérieur (44) du tourillon (35) .

9. Utilisation d'un amortisseur de vibrations (1) selon l'une quelconque des revendications 2 à 8 pour la mise en oeuvre du procédé selon la revendication 1.
